# EUROPÄISCHE PATENTSCHRIFT

(11) **EP 0 658 742 B1**
(45) Veröffentlichungstag und Bekanntmachung des Hinweises auf die Patenterteilung: **05.11.1997**
(21) Anmeldenummer: 94119415.1
(22) Anmeldetag: 08.12.1994
(51) Int. Cl.: G01C 5/04

(54) **Vorrichtung zur Steuerung von Tunnelvortriebsmaschinen**
Device for controlling tunnel-driving machines
Dispositif pour contrôler des machines à creuser le tunnel

(30) Priorität: 14.12.1993 DE 4342542
(43) Veröffentlichungstag der Anmeldung: 21.06.1995
(73) Patentinhaber: Bodenseewerk Gerätetechnik GmbH, 88662 Überlingen (DE)
(72) Erfinder: Hall, Egon, D-88633 Heiligenberg (DE); Bauerbach, Karl, D-88696 Owingen (DE)
(74) Vertreter: Weisse, Jürgen, Dipl.-Phys. Patentanwalt

(56) Entgegenhaltungen:
- US-A- 3 851 716
- US-A- 4 397 099
- US-A- 5 010 768

## Beschreibung

Die Erfindung betrifft eine vorrichtung zur Steuerung von Tunnelvortriebsmaschinen, bei denen ein gebohrter Tunnel oder eine Kanalisation durch Verpressen von Rohren ausgekleidet wird, mit Mitteln zur Messung der Höhendifferenz zwischen einer Basiseinheit und einer relativ dazu beweglichen mobilen Einheit in Form einer Tunnelvortriebsmaschine.

Aus der US-A-3 851 716 ist eine Apparatur bekannt, mit der der Vortriebswinkel einer Vortriebsmaschine bestimmt und angezeigt werden kann. Dies erfolgt jedoch ohne die Verwendung von Drucksensoren. Es wird also lediglich die Abweichung von einem Sollwinkel beim Vortrieb angezeigt und nicht die Abweichung der Position. Bei dieser Apparatur muß der Betreiber der Maschine selbst die Steuerung vornehmen.

Aus der US-A-5 010 768 ist eine Vorrichtung bekannt, mit der die Höhendifferenz einer oder mehrere feste Punkte einer wissenschaftlichen oder industriellen Einrichtung, z.B. eines Synchrotons gemessen wird. Dazu sind die Punkte mit einem Schlauch verbunden. Der Schlauch steht mit einem offenen Flüssigkeitsreservoir in Verbindung und ist mit Flüssigkeit gefüllt. Aus der Druckdifferenz der Drücke durch die Flüssigkeit in dem Schlauch auf Drucksensoren, die mit dem Schlauch an den Punkten in Verbindung stehen, wird dann die Höhendifferenz berechnet. Die Punkte sind jedoch nicht beweglich sondern fest definiert. Eine derartige Anordnung ist daher für die Messung einer Höhendifferenz zwischen einer mobilen und einer festen Einheit nicht geeignet.

Aus der US-A-4 397 099 ist eine Vorrichtung bekannt mit der die Höhendifferenz zwischen zwei festen Punkten bestimmt wird. Dabei werden Drucksensoren an den Punkten angeordnet, die durch einen mit Flüssigkeit gefüllten Schlauch in Verbindung stehen. Es sind bei dieser Anordnung auch Mittel zur Korrektur von Temperaturschwankungen, die das Messergebnis verfälschen könnten vorgesehen. Diese sind jedoch aufwendig. Auch bei dieser Anordnung sind die Punkte, zwischen denen die Höhendifferenz bestimmt wird, fest.

Der Erfindung liegt die Aufgabe zugrunde, mit einfachen Mitteln ein Signal zu gewinnen, das die Höhendifferenz zwischen der Basiseinheit und der mobilen Einheit wiedergibt.

Erfindungsgemäß wird diese Aufgabe bei einer Vorrichtung der eingangs genannten Art dadurch gelöst, daß
(a) die Basiseinheit und die mobile Einheit durch einen Schlauch miteinander verbunden sind,
(b) der Schlauch mit einem offenen Flüssigkeits-Reservoir, dessen Flüssigkeitsspiegel oberhalb des Schlauches liegt, in Verbindung steht und dadurch mit Flüssigkeit unter Druck gefüllt ist,
(c) an der Basiseinheit und an der mobilen Einheit je ein Drucksensor angebracht ist, der auf den Druck der Flüssigkeit in dem Schlauch anspricht, und
(d) eine Einrichtung zur Bildung eines die Druckdifferenz wiedergebenden Druckdifferenz-Signals aus Signalen der beiden Drucksensoren vorgesehen ist, und
(e) die Bewegung der mobilen Einheit nach Maßgabe des Druckdifferenz-Signals steuerbar ist.
Die Druckdifferenz liefert ein Maß für die Höhendifferenz, wenn das spezifische Gewicht der Flüssigkeit bekannt ist. Die absoluten Drücke an den Drucksensoren sind von der Lage und dem Füllstand des Flüssigkeits-Reservoirs abhängig. Die Differenz der von den beiden Drucksensoren gemessenen Drücke hängt jedoch nur von der Höhendifferenz zwischen den beiden Drucksensoren ab. Wenn für Gleichlauf der Drucksensoren gesorgt ist, dann wird ein der Höhendifferenz proportionales Druckdifferenz-Signal erhalten.

Dabei ist die Bewegung der mobilen Einheit nach Maßgabe des Druckdifferenz-Signals steuerbar . Zu diesem Zweck kann ein Anzeigegerät vorgesehen sein, das von dem Druckdifferenz-Signal beaufschlagt ist und das die Abweichung des Druckdifferenz-Signals von einem Sollwert anzeigt.

Ein Ausführungsbeispiel der Erfindung ist nachstehend unter Bezugnahme auf die zugehörige Zeichnung näher erläutert.

Die Zeichnung zeigt eine Vorrichtung zur Messung der Höhendifferenz zwischen einer Basiseinheit und einer als Tunnelvortriebsmaschine ausgebildeten mobilen Einheit.

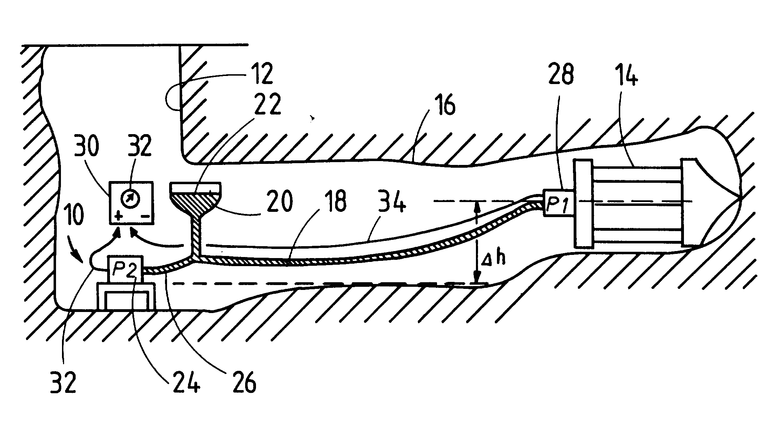

In Fig.1 ist mit 10 eine Basiseinheit bezeichnet, die in genau definierter Position in einem Schacht 12 angeordnet ist. Die Basiseinheit 10 stellt eine Referenzposition für eine mobile Einheit 14 in Form einer Tunnelvortriebsmaschine dar. Die Tunnelvortiebsmaschine bohrt einen Tunnel 16. Der "Tunnel" kann auch eine Kanalisation sein. Dieser Tunnel wird in bekannter, hier nicht näher dargestellter Weise durch Verpressen von Rohren ausgekleidet.

Die Basiseinheit 10 und die mobile Einheit 14 sind durch einen Schlauch 18 miteinander verbunden. Der Schlauch 18 steht mit einem Flüssigkeits-Reservoir 20 in Verbindung. Das Flüssigkeits-Reservoir 20 ist oben zur Atmosphäre hin offen. Das Flüssigkeits-Reservoir 20 hat einen Flüssigkeitsspiegel 22. Der Flüssigkeitsspiegel 20 liegt oberhalb des Schlauches 18. Dadurch ist der Schlauch 18 ganz mit der Flüssigkeit gefüllt.

An der Basiseinheit 10 ist ein Drucksensor 24 angeordnet. Der Drucksensor 24 ist von dem Druck der Flüssigkeit im Schlauch 18 an dessen mit der Basiseinheit 10 verbundenen Ende 26 beaufschlagt. An der mobilen Einheit 14 ist ein Drucksensor 28 angeordnet. Der Drucksensor 28 ist von dem Druck der Flüssigkeit in dem Schlauch 18 an dessen mit der mobilen Einheit 14 verbundenen Ende beaufschlagt.

Mit 30 ist eine Einrichtung zur Bildung eines die Druckdifferenz wiedergebenden Druckdifferenz-Signals aus Signalen der beiden Drucksensoren 24 und 28 bezeichnet. Die Einrichtung 30 ist über eine Leitung 32 mit dem Drucksensor 24 verbunden. Die Einrichtung 30 ist weiterhin über eine Leitung 34 mit dem Drucksensor 28 verbunden. An der Einrichtung 30 ist ein Anzeigegerät 32 vorgesehen, das von dem Druckdifferenz-Signal beaufschlagt ist und das die Abweichung des Druckdifferenz-Signals von einem Sollwert anzeigt.

Nach dieser Anzeige wird die mobile Einheit 14, in diesem Fall die Tunnelvortriebsmaschine so gesteuert, daß der Vortrieb in einer vorgegebenenen Höhe relativ zu der Basiseinheit 10, also mit einer vorgegebenen Höhendifferenz h, erfolgt.

## Patentansprüche

1. Vorrichtung zur Steuerung von Tunnelvortriebsmaschinen, bei denen ein gebohrter Tunnel oder eine Kanalisation durch Verpressen von Rohren ausgekleidet wird, mit Mitteln zur Messung der Höhendifferenz zwischen einer Basiseinheit (10) und einer relativ dazu beweglichen mobilen Einheit (14) in Form einer Tunnelvortriebsmaschine, **dadurch gekennzeichnet, daß**
(a) die Basiseinheit (10) und die mobile Einheit (14) durch einen Schlauch (18) miteinander verbunden sind,
(b) der Schlauch (18) mit einem offenen Flüssigkeits-Reservoir (20) , dessen Flüssigkeitsspiegel (22) oberhalb des Schlauches (18) liegt, in Verbindung steht und dadurch mit Flüssigkeit unter Druck gefüllt ist,
(c) an der Basiseinheit (10) und an der mobilen Einheit (14) je ein Drucksensor (24 bzw. 28) angebracht ist, der auf den Druck der Flüssigkeit in dem Schlauch (18) anspricht, und
(d) eine Einrichtung (30) zur Bildung eines die Druckdifferenz wiedergebenden Druckdifferenz-Signals aus Signalen der beiden Drucksensoren vorgesehen ist, und
(e) die Bewegung der mobilen Einheit (14) nach Maßgabe des Druckdifferenz-Signals steuerbar ist.

2. Vorrichtung nach Anspruch 1, **dadurch gekennzeichnet, daß** ein Anzeigegerät (32) vorhanden ist, das von dem Druckdifferenz-Signal beaufschlagt ist und das die Abweichung des Druckdifferenz-Signals von einem Sollwert anzeigt.

## Claims

1. A device for steering of tunnel boring machines, wherein a bored tunnel or a sewer is lined by pressing tubes into it, comprising means for measuring the level difference between a base unit (10) and a mobile unit (14) in the form of a tunnel boring machine movable relative thereto, characterized in that
(a) the base unit (10) and the mobile unit (14) are interconnected by a hose (18),
(b) the hose (18) communicates with an open liquid reservoir (20), the liquid level (22) of which lies above the hose (18), the hose, thereby, being filled with liquid under pressure,
(c) pressure sensors (24,28) are attached to each the base unit (10) and the mobile unit (14), respectively, the pressure sensors responding to the respective pressures of the liquid under pressure, and
(d) a device (30) for forming, from the signals of the two pressure sensors, a pressure difference signal representing the pressure difference, and
(e) the movement of the mobile unit (14) is steered depending on the pressure difference signal.

2. A device as claimed in claim 1, characterized in that a display (32) is present, to which the pressure difference signal is applied and which indicates the deviation of the pressure difference signal from a setpoint value.

## Revendications

1. Dispositif destiné à commander des machines à creuser des tunnels, pour lesquelles un tunnel percé ou une canalisation est garni par compression de tuyaux, avec des moyens destinés à mesurer la différence de niveau entre une unité de base (10) et une unité mobile (14) susceptible d'être déplacée par rapport à la première sous forme de machine à creuser des tunnels, **caractérisé par le fait que**
(a) l'unité de base (10) et l'unité mobile (14) sont reliées l'une avec l'autre par un tuyau flexible (18),
(b) le tuyau flexible (18) est relié à un réservoir de liquide (20) ouvert dont le niveau de liquide (22) se situe au-dessus du tuyau flexible (18) et est rempli par ce moyen de liquide sous pression,
(c) un capteur de pression (24 et 28 respectivement) est placé chaque fois à l'unité de base (10) et à l'unité mobile (14), capteur qui répond à la pression du liquide dans le tuyau flexible (18), et
(d) une installation (30) destinée à former un signal de différence de pression rendant la différence de pression à partir de signaux des deux capteurs de pression est prévue, et
(e) le déplacement de l'unité mobile (14) est susceptible d'être commandé en fonction du signal de différence de pression.

2. Dispositif selon la revendication 1, **caractérisé par le fait qu'**un appareil d'affichage (32) est présent, appareil auquel est appliqué le signal de différence de pression et qui affiche l'écart du signal de différence de pression d'une valeur de consigne.
